# EUROPEAN PATENT APPLICATION

(11) **EP 2 667 630 A1**
(43) Date of publication of application: **27.11.2013**
(21) Application number: 12755684.3
(22) Date of filing: 06.03.2012
(51) Int. Cl.: H04N 21/434, H04W 84/12

(54) **METHOD FOR DIGITAL TELEVISION AND WIFI HOTSPOT DEVICE**

(30) Priority: 09.03.2011 CN 201110056634
(71) Applicant: Huawei Device Co., Ltd., Shenzhen, Guangdong 518129 (CN)
(72) Inventor: LI, Zhigang, Shenzhen Guangdong 518129 (CN)
(74) Representative: Pfenning, Meinig & Partner GbR
(86) International application number: PCT/CN2012/071968
(87) International publication number: WO 2012/119536

(57) **Abstract**

The present invention discloses a method for implementing a digital television technology, including: performing, by a wireless fidelity hot spot apparatus, decryption and parsing on a received digital television data stream, obtaining an audio stream, a video stream, and a system stream, performing packing on the obtained audio stream, video stream, and system stream according to a predetermined format, sending the packed audio stream, video stream, and system stream to a terminal by using a wireless fidelity technology, and performing, by the terminal, decoding and playback on the received audio stream, video stream, and system stream. The present invention also discloses a wireless fidelity hot spot apparatus. By applying the method and the apparatus according to the present invention, implementation complexity of a digital television technology is decreased.

## Description

This application claims priority to Chinese Patent Application No. 201110056634.5, filed with the Chinese Patent Office on March 9, 2011 and entitled "METHOD FOR IMPLEMENTING DIGITAL TELEVISION TECHNOLOGY AND WIRELESS FIDELITY HOT SPOT APPARATUS", which is incorporated herein by reference in its entirety.

### TECHNICAL FIELD

The present invention relates to the digital television technologies, and in particular, to a method for implementing a digital television technology and a wireless fidelity hot spot apparatus.

### BACKGROUND

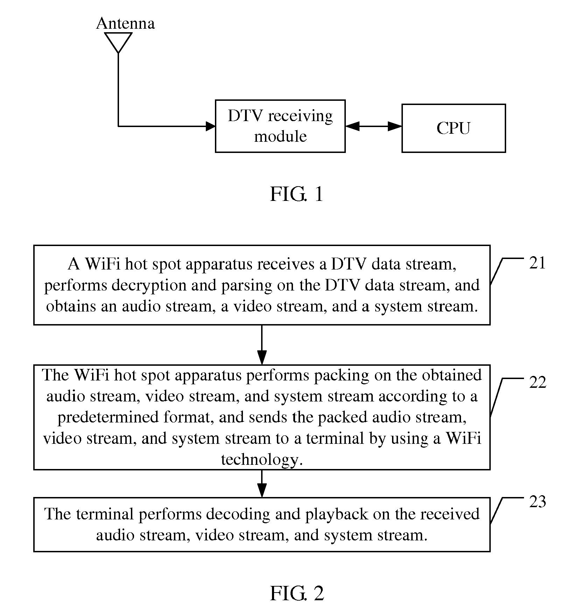

In the conventional art, if a user wants to watch a digital television (DTV, Digital Television) program by using a terminal (such as a mobile phone), the terminal should support a DTV technology, that is, a DTV receiving module needs to be loaded on the terminal. FIG. 1 is a schematic structural diagram of composition of an existing terminal that supports a DTV technology. As shown in FIG. 1, a DTV receiving module receives a DTV data stream from a network side device such as a base station by using an antenna and a central processing unit (CPU, Central Processing Unit) performs processing such as parsing and decoding on the DTV data stream, and performs playback according to a timestamp.

During a process of implementing an embodiment of the present invention, the inventor finds that at least the following technical defects exist in the conventional art: At present, the charging of a DTV service is based on a DTV receiving module, that is, if a user wants to be able to watch a DTV program by using multiple terminals, the user must pay multiple times; in addition, only after a DTV receiving module is loaded on a terminal, a user can watch a DTV program; and the foregoing defects increase implementation complexity of the DTV technology.

### SUMMARY

In view of this, the main objective of the present invention lies in providing a method for implementing a digital television technology, which can decrease implementation complexity of the DTV technology.

Another objective of the present invention lies in providing a wireless fidelity hot spot apparatus, which can decrease implementation complexity of the digital television technology.

To achieve the foregoing objectives, technical solutions of the present invention are implemented as follows:

A method for implementing a digital television technology includes:
performing, by a wireless fidelity hot spot apparatus, decryption and parsing on a received digital television data stream, obtaining an audio stream, a video stream, and a system stream, performing packing on the obtained audio stream, video stream, and system stream according to a predetermined format, sending the packed audio stream, video stream, and system stream to a terminal by using a wireless fidelity technology, and performing, by the terminal, decoding and playback on the received audio stream, video stream, and system stream.

A wireless fidelity hot spot apparatus includes: an antenna, a digital television receiving module, and a sending module, where
the digital television receiving module is configured to receive a digital television data stream through the antenna, perform decryption and parsing on the received digital television data stream, obtain an audio stream, a video stream, and a system stream, perform packing on the obtained audio stream, video stream, and system stream according to a predetermined format, and send the packed audio stream, video stream, and system stream to the sending module; and
the sending module is configured to send the packed audio stream, video stream, and system stream to a terminal by using a wireless fidelity technology.

It may be seen that, by using the technical solutions of the present invention, a digital television receiving module is loaded on a wireless fidelity hot spot apparatus, but not on a terminal. In this way, if a user wants to be able to watch a digital television program by using multiple terminals, it is only required to send an audio stream, a video stream, and a system stream to the multiple terminals by using a wireless fidelity hot spot apparatus. Because the charging of a digital television service is based on the digital television receiving module, the user only needs to pay once, and, the user may watch the digital television program by using any terminal, no more being limited by whether a digital television receiving module is loaded on the terminal or not. In a word, by using the technical solutions of the present invention, implementation complexity of a digital television technology may be better decreased.

### BRIEF DESCRIPTION OF DRAWINGS

FIG. 1 is a schematic structural diagram of composition of an existing terminal that supports a DTV technology;
FIG. 2 is a flowchart of an embodiment of a method for implementing a DTV technology according to the present invention;
FIG. 3 is a schematic structural diagram of composition of an embodiment of a system for implementing a DTV technology according to the present invention; and
FIG. 4 is a schematic structural diagram of composition of an embodiment of a WiFi hot spot apparatus according to the present invention.

### DESCRIPTION OF EMBODIMENTS

For problems in the conventional art, the present invention proposes an improved solution for implementing a DTV technology, that is, setting a wireless fidelity (WiFi, Wireless Fidelity) hot spot apparatus, configured to receive a DTV data stream, and according to the received DTV data stream, obtain an audio stream, a video stream, and a system stream, and send the audio stream, the video stream, and the system stream to a terminal, where the terminal performs decoding and playback on the received audio stream, video stream, and system stream.

The number of the foregoing terminals may be one or more. For example, if a user wants to be able to watch a DTV program by using a mobile phone, a notebook, and a netbook, the number of the terminals is 3, that is, the WiFi hot spot apparatus needs to send the obtained audio stream, video stream, and system stream to the mobile phone, notebook, and netbook of the user (the screen of a mobile phone is relatively small, the resolution of the screen is generally about 640x480, or even smaller, and the watching effect, compared with a notebook and a netbook, is worse).

The foregoing WiFi hot spot apparatus is a completely new device, for example, may be a new product among mobile wireless router series products. The WiFi hot spot apparatus is a product in a hybrid form of WiFi and modem (Modem), with fashionable appearance design, and with ease-to-use and portability of a wireless modem.

To make the technical solutions of the present invention clearer and more explicit, the solutions of the present invention are further described in detail in the following with reference to accompanying drawings and embodiments.

FIG. 2 is a flowchart of an embodiment of a method for implementing a DTV technology according to the present invention. As shown in FIG. 2, the method includes the following steps.

Step 21: A WiFi hot spot apparatus receives a DTV data stream, performs decryption and parsing on the DTV data stream, and obtains an audio stream, a video stream, and a system stream.

In this step, the WiFi hot spot apparatus may receive a DTV data stream from a network side device such as a base station through its own antenna, perform decryption on the DTV data stream, and obtain a composite stream; and afterwards, perform parsing on the obtained composite stream, and obtain an audio stream, a video stream, and a system stream.

How to perform decryption and parsing are both the conventional art.

Step 22: The WiFi hot spot apparatus performs packing on the obtained audio stream, video stream, and system stream according to a predetermined format, and sends the packed audio stream, video stream, and system stream to a terminal by using a wireless fidelity technology.

In this step, the WiFi hot spot apparatus may perform packing on the obtained audio stream, video stream, and system stream according to a format stipulated by a Digital Living Network Alliance (DLAN, Digital Living Network Alliance) architecture, for example, a format stipulated by the real-time transport protocol (RTP, Real-Time Transport Protocol), and send the packed audio stream, video stream, and system stream to a terminal by using a WiFi technology. Accordingly, the terminal needs to support the DLAN architecture, and support the WiFi technology. How to perform packing is the conventional art.

Step 23: The terminal performs decoding and playback on the received audio stream, video stream, and system stream.

In actual application, to avoid a case that a data stream is interrupted at a time point, in this step, the decoded audio stream, video stream, and system stream may be cached for a period of time, and then be played back, where the period of time is usually 2 seconds.

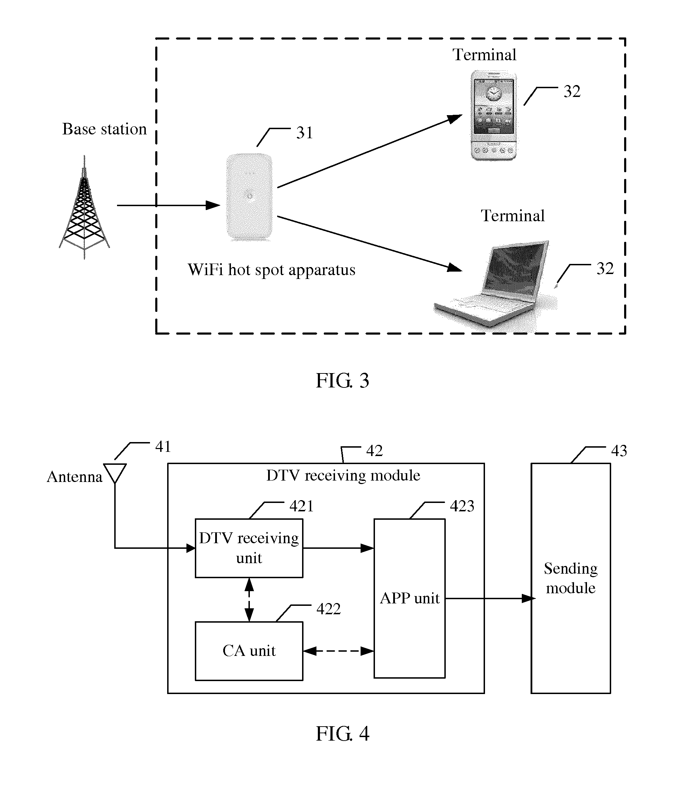

Based on the foregoing introduction, FIG. 3 is a schematic structural diagram of composition of an embodiment of a system for implementing a DTV technology according to the present invention. As shown in FIG. 3, the system includes: a WiFi hot spot apparatus 31 and a terminal 32, where
the WiFi hot spot apparatus 31 is configured to perform decryption and parsing on a DTV data stream received from a network side device such as a base station, obtain an audio stream, a video stream, and a system stream, perform packing on the obtained audio stream, video stream, and system stream according to a predetermined format, and send the packed audio stream, video stream, and system stream to the terminal 32 by using a WiFi technology; and
the terminal 32 is configured to perform decoding and playback on the received audio stream, video stream, and system stream.

The number of terminals 32 may be one, and also may be a plurality. FIG. 3 shows two.

FIG. 4 is a schematic structural diagram of composition of an embodiment of a WiFi hot spot apparatus according to the present invention. As shown in FIG. 4, the apparatus includes: an antenna 41, a DTV receiving module 42, and a sending module 43, where
the DTV receiving module 42 is configured to receive a DTV data stream through the antenna 41, perform decryption and parsing on the received DTV data stream, obtain an audio stream, a video stream, and a system stream, perform packing on the obtained audio stream, video stream, and system stream according to a predetermined format, and send the packed audio stream, video stream, and system stream to the sending module 43; and
the sending module 43 is configured to send the packed audio stream, video stream, and system stream to a terminal by using a WiFi technology.

The foregoing predetermined format may be: a format stipulated by the DLAN architecture.

As shown in FIG. 4, the DTV receiving module 42 may specifically include: a DTV receiving unit 421, a conditional access (CA, Conditional Access) unit 422, and an application processing (APP, Application Processor) unit 423, where
the DTV receiving unit 421 is configured to receive the DTV data stream through the antenna 41, send the DTV data stream to the CA unit 422, and send, to the APP unit 423, a composite stream returned by the CA unit 422;
the CA unit 422 is configured to perform decryption on the received DTV data stream, obtain the composite stream, and return the composite stream to the DTV receiving unit 421; and
the APP unit 423 is configured to perform parsing on the received composite stream, obtain the audio stream, the video stream, and the system stream, perform packing on the obtained audio stream, video stream, and system stream according to the predetermined format, and send the packed audio stream, video stream, and system stream to the sending module 43;
or, the DTV receiving unit 421 is configured to receive the DTV data stream through the antenna 41, and send the DTV data stream to the APP unit 423;
the APP unit 423 is configured to send the received DTV data stream to the CA unit 422, perform parsing on a composite stream returned by the CA unit 422, obtain the audio stream, the video stream, and the system stream, perform packing on the obtained audio stream, video stream, and system stream according to the predetermined format, and send the packed audio stream, video stream, and system stream to the sending module 43; and
the CA unit 422 is configured to perform decryption on the received DTV data stream, obtain the composite stream, and return the composite stream to the APP unit 423.

From the foregoing introduction, it may be seen that, the CA unit 422 may either connect to the DTV receiving unit 421, or connect to the APP unit 423. In actual application, there are multiple types of implementation manners of the CA unit 422, for example, in the China Mobile Multimedia Broadcasting (CMMB, China Mobile Multimedia Broadcasting) standard mainly promoted by the State Administration of Radio, Film and Television, implementation manners such as a big card, a small card, a surface mounted device (SMD, Surface Mounted Devices), and a user identification card (SIM, Subscriber Identify Module) have been promoted successively.

When an implementation manner of the CA unit 422 is a big card or small card, an interface between the CA unit 422 and the DTV receiving unit 421, or an interface between the CA unit 422 and the APP unit 423 may be a secure digital memory card (SD, Secure Digital Memory Card) interface, and when the implementation manner of the CA unit 422 is an SMD or a SIM, the interface between the CA unit 422 and the DTV receiving unit 421, or the interface between the CA unit 422 and the APP unit 423 may be a SIM interface.

In addition, an interface between the DTV receiving unit 421 and the APP unit 423 may be: a secure digital input and output card (SDIO, Secure Digital Input and Output Card) interface, a synchronization serial interface (SPI, Serial Peripheral Interface), or a universal serial bus (USB, Universal Serial Bus) interface; and an interface between the APP unit 423 and the sending module 43 may be an SDIO interface.

In actual application, the foregoing modules and units all work under the control of corresponding software.

It may be seen that, by using the technical solutions of the present invention, a DTV receiving module is loaded on a WiFi hot spot apparatus, but not on a terminal. In this way, if a user wants to be able to watch a DTV program by using multiple terminals, it is only required to send an audio stream, a video stream, and a system stream to the multiple terminals by using the WiFi hot spot apparatus, but because the charging of a DTV service is based on the DTV receiving module, the user only needs to pay once, and, the user may watch the DTV program by using any terminal, no more being limited by whether a DTV receiving module is loaded on the terminal or not, thereby better decreasing implementation complexity of a DTV technology. In addition, the solutions of the present invention do not need to perform an additional operation such as configuration on the terminal, being simple and convenient to implement and facilitating popularization.

The foregoing descriptions are merely exemplary embodiments of the present invention, but are not intended to limit the present invention. Any modification, equivalent replacement, or improvement made within the spirit and principle of the present invention should fall within the protection scope of the present invention.

## Claims

1. A method for implementing a digital television technology, comprising:
performing, by a wireless fidelity hot spot apparatus, decryption and parsing on a received digital television data stream, obtaining an audio stream, a video stream, and a system stream, performing packing on the obtained audio stream, video stream, and system stream according to a predetermined format, sending the packed audio stream, video stream, and system stream to a terminal by using a wireless fidelity technology, and performing, by the terminal, decoding and playback on the received audio stream, video stream, and system stream.

2. The method according to claim 1, wherein the performing decryption and parsing on a received digital television data stream, obtaining an audio stream, a video stream, and a system stream comprises:
performing decryption on the received digital television data stream, and obtaining a composite stream; and
performing parsing on the obtained composite stream, and obtaining the audio stream, the video stream, and the system stream.

3. The method according to claim 1, wherein the performing packing on the obtained audio stream, video stream, and system stream according to a predetermined format comprises:
performing packing on the obtained audio stream, video stream, and system stream according to a format stipulated by a Digital Living Network Alliance architecture.

4. The method according to any one of claims 1 to 3, before the performing playback, further comprising:
caching, by the terminal, the decoded audio stream, video stream, or system stream for a period of time, and afterwards, performing playback.

5. A wireless fidelity hot spot apparatus, comprising: an antenna, a digital television receiving module, and a sending module, wherein
the digital television receiving module is configured to receive a digital television data stream through the antenna, perform decryption and parsing on the received digital television data stream, obtain an audio stream, a video stream, and a system stream, perform packing on the obtained audio stream, video stream, and system stream according to a predetermined format, and send the packed audio stream, video stream, and system stream to the sending module; and
the sending module is configured to send the packed audio stream, video stream, and system stream to a terminal by using a wireless fidelity technology.

6. The wireless fidelity hot spot apparatus according to claim 5, wherein the digital television receiving module comprises: a digital television receiving unit, a conditional access unit, and an application processing unit, wherein
the digital television receiving unit is configured to receive the digital television data stream through the antenna, send the digital television data stream to the conditional access unit, and send, to the application processing unit, a composite stream returned by the conditional access unit;
the conditional access unit is configured to perform decryption on the received digital television data stream, obtain the composite stream, and return the composite stream to the digital television receiving unit; and
the application processing unit is configured to perform parsing on the received composite stream, obtain the audio stream, the video stream, and the system stream, perform packing on the obtained audio stream, video stream, and system stream according to the predetermined format, and send the packed audio stream, video stream, and system stream to the sending module;
or,
the digital television receiving unit is configured to receive the digital television data stream through the antenna, and send the digital television data stream to the application processing unit;
the application processing unit is configured to send the received digital television data stream to the conditional access unit, perform parsing on the composite stream returned by the conditional access unit, obtain the audio stream, the video stream, and the system stream, perform packing on the obtained audio stream, video stream, and system stream according to the predetermined format, and send the packed audio stream, video stream, and system stream to the sending module; and
the conditional access unit is configured to perform decryption on the received digital television data stream, obtain the composite stream, and return the composite stream to the application processing unit.

7. The wireless fidelity hot spot apparatus according to claim 6, wherein
an interface between the digital television receiving unit and the application processing unit is one of the following: a secure digital input and output card interface, a synchronization serial interface, and a universal serial bus interface;
an interface between the application processing unit and the sending module is a secure digital input and output card interface; and
an interface between the conditional access unit and the digital television receiving unit, or an interface between the conditional access unit and the application processing unit is one of the following: a secure digital memory card interface and a user identification card interface.

8. The wireless fidelity hot spot apparatus according to claim 5, wherein the predetermined format is: a format stipulated by a Digital Living Network Alliance architecture.

9. The wireless fidelity hot spot apparatus according to claim 5 or 8, wherein the wireless fidelity hot spot apparatus is: a mobile wireless router.
